# EUROPÄISCHE PATENTSCHRIFT

(11) **EP 3 552 460 B1**
(45) Veröffentlichungstag und Bekanntmachung des Hinweises auf die Patenterteilung: **15.03.2023**
(21) Anmeldenummer: 17837947.5
(22) Anmeldetag: 08.12.2017
(51) Int. Cl.: G01T 1/08

(54) **DETEKTORBAND FÜR RÖNTGENFILM**
DETECTOR STRIP FOR RADIOGRAPHIC FILM
BANDE DE DÉTECTION POUR UN FILM RADIOGRAPHIQUE

(30) Priorität: 08.12.2016 DE 102016123846
(43) Veröffentlichungstag der Anmeldung: 16.10.2019
(73) Patentinhaber: VISUS Health IT GmbH, 44801 Bochum (DE)
(72) Erfinder: FRIEBE, Michael, 45657 Recklinghausen (DE); ILLANES MANRIQUEZ, Alfredo, 39112 Magdeburg (DE); PASHAZADEH, Ali, 39106 Magdeburg (DE); ROSIEPEN, Peter, 44799 Bochum (DE)
(74) Vertreter: Richardt Patentanwälte PartG mbB
(86) Internationale Anmeldenummer: PCT/EP2017/081954
(87) Internationale Veröffentlichungsnummer: WO 2018/104497

(56) Entgegenhaltungen:
- EP-A1- 0 779 521
- EP-A1- 0 849 980
- WO-A1-2007/034033
- KUO TSUNG-TER ET AL: "Flexible x-ray imaging detector based on direct conversion in amorphous selenium", JOURNAL OF VACUUM SCIENCE AND TECHNOLOGY: PART A, AVS /AIP, MELVILLE, NY., US, Bd. 32, Nr. 4, 12. Juni 2014 (2014-06-12), XP012186305, ISSN: 0734-2101, DOI: 10.1116/1.4882835

## Beschreibung

Die Erfindung betrifft ein System zur Erfassung von Bildparametern bei der Belichtung von Filmen, insbesondere Röntgenfilmen.

Derartige Röntgenfilme werden häufig im Bereich der zerstörungsfreien Prüfung (NDT = non-destructive testing) eingesetzt. Die zerstörungsfreie Prüfung ist eine Disziplin, die nicht-invasive Techniken verwendet, um den Zustand von Materialien und Strukturen zu untersuchen. Die Hauptaufgabe der zerstörungsfreien Prüfung ist es, Fehler oder Defekte aufzudecken und Anhaltspunkte zu geben, ob der Fehler oder Defekt hinsichtlich der Betriebssicherheit und / oder der Zuverlässigkeit des untersuchten Objektes wesentlich ist.

Zur zerstörungsfreien Prüfung werden viele verschiedene Technologien und Methoden angewandt. Eine der am häufigsten verwendeten Technologien für die volumetrische Prüfung ist die Radiographie. Hier werden insbesondere Röntgenstrahlen oder Gammastrahlen verwendet, um ein radiographisches Bild des zu prüfenden Objektes zu erzeugen. Die eindringende Strahlung wird verwendet, um die interne Struktur von festen und harten Materialien, wie etwa Stahl oder anderen Metallen oder auch Beton, zu visualisieren. Bei dem übliche Prüfungsverfahren befindet sich auf der einen Seite des Untersuchungsobjekts eine Strahlungsquelle (Gamma-/Röntgenstrahlung) und auf der anderen Seite des Untersuchungsobjekts ein strahlungsempfindlicher Film, um die das Untersuchungsobjekt durchdringende Strahlung zu detektieren. Dies ermöglicht die Visualisierung des Untersuchungsobjekts in Bezug auf Unterschiede hinsichtlich der Dicke, Änderungen in der Struktur oder andere innerer Defekte oder Fehler.

Bei der filmbasierten Radiographie unter Verwendung von Gamma-Radioisotopen wie Co-60 oder Cs-137 werden Bilder durch eine chemische Wechselwirkung der Photonen mit dem Filmmaterial erzeugt. Der Film besteht hierzu aus einer Gelatine-Emulsion die strahlungsempfindliche Silberhalogenidkristalle enthält und eine flexible, transparente, blau getönte Basis. Wenn die energetischen Photonen auf die strahlungsempfindlichen Silberhalogenidkristalle auftreffen, geschieht eine chemische Wechselwirkung im Inneren des Filmmaterials was zur Belichtung des Filmes führt.

Da die chemischen Substanzen in Röntgenfilmen strahlungsempfindlich sind, kann es leicht zu einer Überbelichtung des Films kommen, was die Qualität des endgültigen Bildes verschlechtert. Diese Überbelichtung kann dazu führen, dass der Film zu dunkel wird und das aufgenommene Bild unbrauchbar ist. Eine Unterbelichtung des Films, auf der anderen Seite, kann ebenfalls zu einem unbrauchbaren Bild führen, da die gewünschten Einzelheiten des Untersuchungsobjekts auf dem Bild nicht zu sehen sind. Um ausreichend detaillierte Informationen von dem Untersuchungsobjekt zu gewinnen, ist es erforderlich, dass die Belichtung des Films nach einer angemessenen Zeit (Belichtungszeit) beendet wird. Die korrekte Belichtungszeit hängt von dem Untersuchungsobjekt und der verwendeten Strahlungsquelle ab und ist in der Praxis häufig schwierig zu bestimmen.

Die Qualität eines Röntgenbildes und damit die Erkennbarkeit von Defekten und Fehlern des Untersuchungsobjektes hängen hauptsächlich vom Kontrast, der Schärfe und der Körnigkeit des Bildes ab. Dies sind die grundlegenden Bildparameter, welche die Qualität eines Röntgenbildes bestimmen. Diese Parameter haben einen großen Einfluss auf die Nachweisbarkeit von Defekten und Fehlern in einem Untersuchungsobjekt. Während die Schärfe und die Körnigkeit hauptsächlich vom Versuchsaufbau und der Qualität des Films abhängen, hängt der Kontrast stark von der Strahlungsenergie und der Dauer der Belichtung ab. Die erforderliche Strahlungsenergie und nötige Belichtungsdauer hängen von weiteren Faktoren ab, welche die Bildqualität und damit die Nachweisbarkeit von Defekten und Fehlern beeinflussen können.

Heute ist das Verfahren für die zerstörungsfreie Prüfung anhand von Röntgenaufnahmen unter Verwendung einer Gammaquelle und eines fotografischen Films abhängig von der Anordnung der Strahlungsquelle und dem Film sowie der Belichtungszeit, wobei der Bediener während der Belichtung einen Sicherheitsabstand zu dem Untersuchungsobjekt und der Prüfungsvorrichtung einhalten muss.

Diese Prüfungen laufen teilweise über einen langen Zeitraum, geschuldet durch teilweise sehr große Objekte und damit einer entsprechend geringen Anzahl von Gammaphotonen, die vom Film aufgenommen werden. Die bekannten Verfahren nutzen sehr oft nuklidbasierte Strahlungsquellen und analoge Filme.

Erst nach der Belichtung kann der Bediener den belichteten Film verarbeiten (entwickeln und digitalisieren), um die Bildanalyse vorzunehmen und Defekte und Fehler des Untersuchungsobjektes zu finden. Erst zu diesem Zeitpunkt kann derzeit festgestellt werden, ob sich das gewonnene Bildmaterial für die Analyse zur zerstörungsfreien Prüfung eignet oder ob eine erneute Aufnahme mit veränderten Parametern erforderlich ist.

Die EP 0779 521 A1 betrifft ein System zur Erfassung von Röntgenstrahlung, wobei das System Detektorelemente aufweist, wobei die Detektorelemente dazu ausgebildet, sind auftreffende Strahlung oder transmittierte Strahlung zu detektieren, und wobei das Detektorelement dazu ausgebildet ist, dabei ein Signal zu erzeugen, aus dem Parameter ableitbar sind.

Die WO 2007/034003 A1 beschreibt ein System zur Erfassung von Bildparametern bei der Belichtung von Röntgenfilmen, wobei das System ein Detektorelement aufweist, wobei das Detektorelement dazu ausgebildet ist, die bei der Belichtung durch den Film transmittierte Strahlung ortsaufgelöst zu detektieren, und wobei das Detektorelement dazu ausgebildet ist, dabei ein Signal zu erzeugen, um die Strahlungsdosis abhängig von dem verwendeten Film zu steuern.

In der EP 0 849 980 A1 wird über ein Fotobilddetektor ein elektrisches Bildsignal erzeugt.

In KUO TSUNG-TER ET AL : "Flexible x-ray imaging detector based on direct conversion in amorphous selenium", JOURNAL OF VACUUM SCIENCE AND TECHNOLOGY: PART A, AVS /AIP, MELVILLE, NY., US, Bd. 32, Nr. 4, 12. Juni 2014 (2014-06-12) ist ein flexibler Röntgendetektor beschrieben, mit dem die Verwendung von konventionellen Röntgenfilmen ersetzt werden kann.

Der Erfindung stellt sich somit weiterhin das Problem, ein System anzugeben, welches die beschriebenen Nachteile behebt und eine einfache und schnelle Herstellung optimal belichteter Aufnahmen ermöglicht und eine Vorhersagemöglichkeit für den optimalen Belichtungszeitpunkt zulässt.

Erfindungsgemäß wird dieses Problem durch eine Einheit aus Film und System zur Erfassung der Bildparameter bei der Belichtung des Films mit den Merkmalen des Patentanspruchs 1 gelöst.

Erfindungsgemäß umfasst das System zur Erfassung von Bildparametern bei der Belichtung von Filmen, insbesondere Röntgenfilmen, ein Detektorelement, das an einem strahlungssensitiven Film lösbar anbringbar ist (z.B. an der von der verwendeten Strahlungsquelle abgewandten Rückseite des Films oder an der Vor- oder Rückseite einer den Film aufnehmenden Kassette) und das die bei der Belichtung auf den Film auftreffende Strahlung oder die durch den Film transmittierte Strahlung ortsaufgelöst detektiert und dabei ein Signal erzeugt, aus dem durch die laufende Belichtung erzeugte Bildparameter ableitbar sind. Aufgrund der hohen Bedeutung der Belichtungszeit und deren Einfluss auf die Bildqualität ist die erfindungsgemäße Echtzeitüberwachung der erzeugten Bildparameter während der laufenden Belichtung von großem Vorteil. Hierdurch lassen sich nicht nur die Kosten reduzieren, indem fehlerhaft belichtete Filme vermieden werden, sondern es lässt sich auch die Zeit der Bauteilüberprüfung reduzieren, da keine Wiederholungen der Aufnahmen erforderlich sind.

Das hier vorgeschlagene System bezieht sich insbesondere auf die röntgenologische zerstörungsfreie Prüfung und insbesondere auf die Verwendung von Röntgenfilmen. Hier besteht besonders die Notwendigkeit der Echtzeitüberwachung der Bildqualität, insbesondere des Bildkontrastes. Die Grundidee der vorgeschlagenen Lösung besteht darin, an einem einfachen Film das (möglichst digitale) Detektorelement anzubringen und hierdurch eine Echtzeit-Monitoring-Lösung zu schaffen. Mit einem solchen System zur Echtzeit-Digital-Datenerfassung und -verarbeitung kann automatisch detektiert werden, wann die Bildqualität im Film, insbesondere der Kontrast, optimal ist. Somit kann die Belichtung automatisch zu genau dem richtigen Zeitpunkt beendet werden.

Die lösbare Anbringbarkeit des Detektorelementes an dem Film ermöglicht es, das Detektorelement für eine Vielzahl von Aufnahmen mit jeweils neuem Filmmaterial immer wieder zu verwenden. Die Anbringung an dem Film sorgt für eine Fixierung an dem Film während der Belichtung.

Vorteilhafte Ausgestaltungen und Weiterbildungen der Erfindung ergeben sich aus den abhängigen Ansprüchen.

Gemäß einer vorteilhaften Ausgestaltung der Erfindung ist vorgesehen, dass aus dem von dem Detektorelement erzeugten Signal der durch die laufende Belichtung auf dem Film erzeugte Bildkontrast ableitbar ist. Durch den Erhalt von Echtzeit-Informationen zu dem aktuell erreichten Bildkontrast kann die Belichtung so gesteuert werden, dass optimale Ergebnisse bei den Aufnahmen erzielt werden.

Eine vorteilhafte Ausführung ist, dass das Detektorelement mit einem Auswertungssystem verbunden ist. Das mit dem Detektorelement verbundene Auswertungssystem führt die Ableitung der Bildparameter aus den Messsignalen durch und ermöglicht die darauf basierende Überwachung der Belichtung.

Eine bevorzugte Ausführung sieht vor, dass das Auswertungssystem lokale Belichtungsunterschiede anhand der Signale des Detektorelementes analysiert. Anhand der lokalen Belichtungsunterschiede lässt sich die Qualität der Aufnahme während der Belichtung bewerten.

Besonders vorteilhaft ist die Weiterbildung, dass das Auswertungssystem eine Meldung erzeugt, sobald absehbar ist, dass die Bildqualität vorgebbaren Kriterien entspricht. Die unmittelbare Rückmeldung des Auswertungssystems ermöglicht diesem zur Erreichung einer optimalen Bildqualität rechtzeitig einzugreifen, z.B. um die Belichtung zu beenden. Dem Benutzer vor Ort muss es möglich sein, die Belichtung abzubrechen oder zu beenden. Dies kann geschehen durch die komplette Strahlenabschirmung der Strahlungsquelle, so dass keine weiteren Gammaphotonen mehr am Detektorelement ankommen. Es könnte allerdings auch ein Bleielement mechanisch oder elektrisch über den Film gezogen werden.

Weiter vorteilhaft ist die Ausgestaltung, dass das Auswertungssystem die Belichtung des Filmes automatisch unterbricht, sobald die Bildqualität vorgebbaren Kriterien entspricht. Die automatische Unterbrechung der Aufnahme bei Erreichung von vorgegebenen Parametern (z.B. hinsichtlich Kontrast oder Gesamtdosis) erleichtert die Erstellung von Aufnahmen und reduziert die erforderliche Erfahrung des Bedienpersonals.

Eine weitere vorteilhafte Ausführungsform der Erfindung sieht vor, dass das Auswertungssystem mit einer Kommunikationseinheit verbunden ist, welche Ergebnisse des Auswertungssystems an externe Geräte übermittelt. Die vorzugsweise drahtlose Verbindung des Auswertungssystems mit einem externen Gerät erleichtert die Bedienung des Systems. Auf diese Weise kann das Auswertungssystem auch mit einem ausreichenden Sicherheitsabstand über ein externes Gerät ausgelesen oder bedient werden.

Gemäß einer vorteilhaften Ausgestaltung der Erfindung ist vorgesehen, dass das Detektorelement eine Mehrzahl von digitalen Strahlungssensoren, z.B. in einer Array-Anordnung, umfasst. Die digitale Ausgestaltung des Detektorelements ermöglicht die elektronische Auswertung und Weiterverarbeitung der Messsignale in Echtzeit. Die Kosten der digitalen Sensorik sind nicht sehr relevant, da das Detektorelement beliebig oft verwendet werden kann. Die Mehrkosten werden durch die Einsparungen resultierend aus dem Nutzen des erfindungsgemäßen Systems (Vermeidung von Fehlbelichtungen) überkompensiert.

Erfindungsgemäß ist das Detektorelement als längliches Band ausgebildet. Die bandförmige Ausbildung des Detektorelements bietet die Möglichkeit, einen schmalen, streifenförmigen Ausschnitt der Filmbelichtung zu erfassen. Ein eindimensionales Array von digitalen Strahlungssensoren kann vorteilhaft an dem Band angeordnet sein. Die Aufnahme eines somit gleichsam eindimensionalen digitalen Bildes während der Filmbelichtung reicht aus, um die Bildqualität (insbesondere hinsichtlich des erzielten Kontrastes) zu beurteilen.

Weiterhin erstreckt sich das Band erfindungsgemäß entlang seiner Längserstreckung über den gesamten Film. Die Erstreckung des Detektorelementes über den gesamten belichteten Bereich des Films in einer Richtung macht eine hinreichende Erfassung der Bildparameter bei der Belichtung möglich. Das Band wird bei der Aufnahme möglichst so an dem Film angeordnet, dass die Intensitätsschwankungen entlang des Bandverlaufes maximal sind. Dies ermöglicht die zuverlässige Beurteilung der Bildqualität anhand des von dem bandförmigen Detektorelement gelieferten eindimensionalen Digitalbildes.

Außerdem ist das Band erfindungsgemäß flexibel ausgestaltet. Die flexible Ausgestaltung des Detektorelementes macht die Handhabung, z.B. die Anbringung des Bandes an dem Film besonders einfach. Außerdem kann das flexible Band platzsparend verstaut werden. Weiter kann das Band genutzt werden, auch wenn der Film bei der Belichtung eine beliebig gekrümmte oder gebogene Form hat.

Vorzugsweise weist das System eine Stromversorgung auf. Hier ist es von besonderem Vorteil, wenn die Stromversorgung durch einen Akkumulator autark ist, sodass das System unabhängig von den lokalen Gegebenheiten am Untersuchungsobjekt eingesetzt werden kann.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen rein schematisch dargestellt und werden nachfolgend näher beschrieben. Einander entsprechende Gegenstände oder Elemente sind in allen Figuren mit den gleichen Bezugszeichen versehen. Es zeigen:
- Figur 1: schematische Darstellung des erfindungsgemäßen Systems;
- Figur 2: Röntgenbilder mit Profillinien.

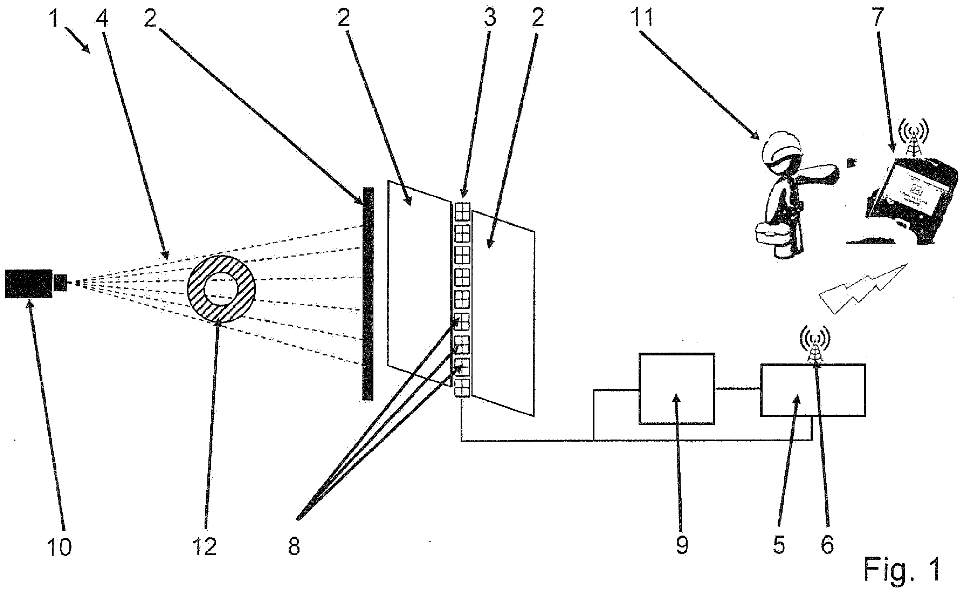

In Figur 1 mit dem Bezugszeichen 1 bezeichnet ist ein System 1 zur Erfassung von Bildparametern bei der Belichtung von Filmen 2, insbesondere Röntgenfilmen, schematisch dargestellt. Die Darstellung gemäß Figur 1 zeigt eine Strahlungsquelle 10, von der aus Strahlung 4 in Richtung Untersuchungsobjekt 12 und Film 2 emittiert wird. Bei der Belichtung des Films 2 durchdringt die Strahlung 4 der Strahlungsquelle 10 das Untersuchungsobjekt 12, wobei ein Teil der Strahlung 4 durch das Untersuchungsobjekt 12 absorbiert wird. Hierdurch ist nach ausreichender Belichtung des Films 2 die Kontur und auch die innere Struktur des Untersuchungsobjektes 12 auf der Aufnahme zu erkennen. Dies ist das bekannte Prinzip der filmbasierten Röntgenbildgebung zur zerstörungsfreien Prüfung.

Wie oben erwähnt, ist die Belichtung entscheidend für die Erreichung einer optimalen Bildqualität. Aus diesem Grund weist das erfindungsgemäßen System ein digitales Detektorelement 3 auf, das an dem Film 2 angebracht werden kann (z.B. durch Adhäsion oder durch Anklemmen mittels geeigneter Halteelemente) und das die bei der Belichtung auf den Film 2 auftreffende Strahlung 4 detektiert und hieraus ein Signal erzeugt, welches auf die bei der Belichtung erreichten Bildparameter zurückschließen lässt. Diese Bildparameter umfassen insbesondere den durch die Belichtung erzeugten Kontrast auf dem Film 2. Das Detektorelement 3 ist mit einem Auswertungssystem 5 verbunden, welches die Signale des Detektorelementes 3 auswertet. Das Auswertungssystem 5 analysiert hierbei insbesondere lokale Belichtungsunterschiede der mit dem Detektorelement 3 erfassten Strahlung. Anhand dieser Auswertungen übermittelt das Auswertungssystem 5 eine Meldung an einen Bediener, sobald die Bildqualität den vom Bediener vorgegebenen Bildparametern entspricht. Das Auswertungssystem 5 kann zudem die Belichtung des Films 2 automatisch unterbrechen, sobald die Bildqualität den vom Bediener gewünschten Bildparametern entspricht. An das Auswertungssystem 5 angeschlossen ist außerdem eine Kommunikationseinheit 6, welche über eine drahtlose Verbindung die Ergebnisse des Auswertungssystems 5 an externe Geräte 7 (beispielsweise Smartphones oder Laptops) übermittelt. Über die externen Geräte 7 kann das Auswertungssystem 5 und ggf. auch die Strahlungsquelle 10 zudem aus der Ferne gesteuert werden.

In Figur 1 gut zu erkennen ist, dass das Detektorelement 3 als Band ausgebildet ist, das sich in einer Richtung über den gesamten belichteten Filmbereich erstreckt. Das Detektorelement 3 weist eine Mehrzahl von räumlich verteilten digitalen Strahlungssensoren 8 auf, wobei aus Gründen der Übersicht nur einzelne mit Bezugszeichen versehen sind. Die Strahlungssensoren 8 sind z.B. Szintillatorkristalle mit diesen jeweils zugeordneten Photodetektoren oder röntgenempflindliche Halbleiterelemente an sich bekannter Art, wie sie z.B. in der medizinischen Röntgenbildgebung Verwendung finden. Das System 1 verfügt über eine autarke Stromversorgung 9, damit die zerstörungsfreie Untersuchung von beliebigen Objekten (z.B. Bauwerks- oder Maschinenteilen) vor Ort flexibel möglich ist. Für die optimale Anbringung an dem Film ist das Detektorelement 3, die Auswertungssystem 5 und die Kommunikationseinheit 6 möglichst klein und kompakt auszuführen. Diese Komponenten benötigen dann nur einen sehr geringem Strombedarf mit niedrigen Spannungen (< 50V).

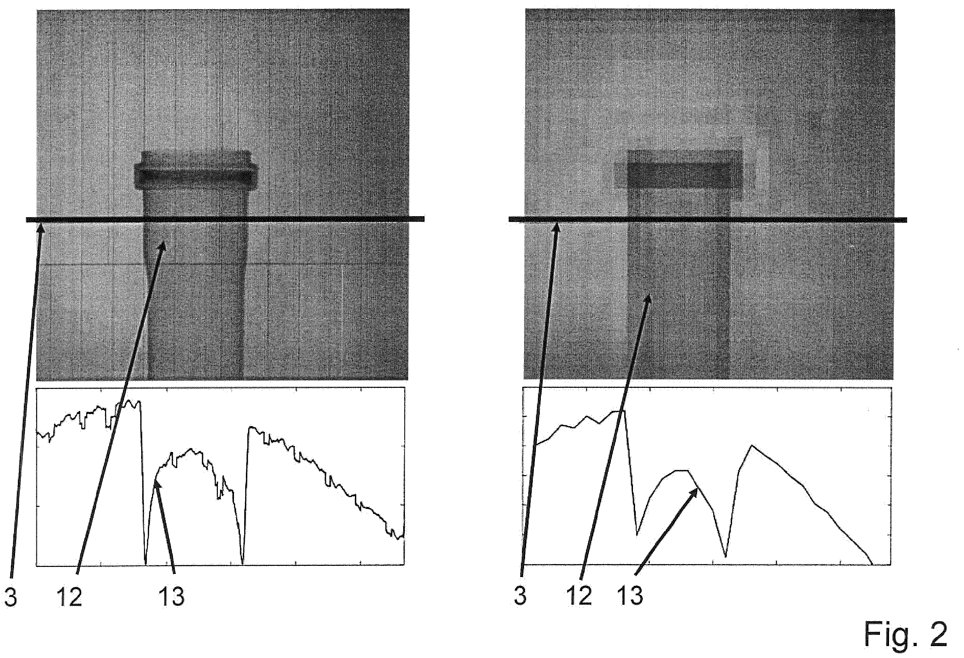

Die Figur 2 zeigt beispielhaft zwei Bildaufnahmen (links und rechts) zu denen die Bildparameter mittels des erfindungsgemäßen Systems 1 (Fig. 1) erfasst werden. Das bandförmige Detektorelement 3 ist bei diesen Aufnahmen in der Bildmitte zur Erfassung einer Bildzeile angeordnet, wie in den Aufnahmen durch die schwarze Linie angedeutet. Durch die Erfassung der auf den Film 2 (Fig. 1) auftreffenden Strahlung 4 (Fig. 1) wird ein Signal erzeugt, welches durch das unter den Aufnahmen jeweils dargestellte Linienprofil 13 visualisiert ist. Die durch das Detektorelement 3 erhaltenen Daten werden zur Untersuchung lokaler Unterschiede als ein Linienprofilsignal 13 aus dem Bild betrachtet. Die mit dem System 1 (Fig.1) überwachten Aufnahmen zeigen ein digitales Röntgenbild eines Kunststoffrohres. Das bandförmige Detektorelement 3 lieferte(eindimensional) ortsaufgelöste Informationen zur Belichtung. Auf der linken Seite der Figur 2 ist die ursprüngliche digitale Röntgenaufnahme mit zugehörigem Linienprofil 13 unterhalb gezeigt. Auf der rechten Seite der Figur 2 ist eine unterabgetastete Version des digitalen Bildes mit 2% der ursprünglichen Bildgröße gezeigt. Unterhalb dieser Aufnahme befindet sich ein entsprechend erfasstes Linienprofil 13. Wie deutlich an den Linienprofilen 13 zu erkennen ist, wird die Strahlung 4 (Fig. 1) im Bereich des Untersuchungsobjektes 12 stärker absorbiert, sodass lokal weniger auftreffende Strahlung durch das Detektorelement 3 gemessen wird. Um anhand der vom Detektorelement 3 erfassten Signale zu quantifizieren, ob die Bildqualität den Vorgaben entspricht, können verschiedene Indikatoren berücksichtigt werden. Mögliche Indikatoren ergeben sich aus der Steigung und der Krümmung des Linienprofils 13. Anhand dieser beiden Indikatoren kann durch das Auswertungssystem 5 (Fig. 1) entschieden werden, ob hinreichend Intensitätsänderungen des entlang des Bandes erfassten Signals vorliegen, woraus auf den Bildkontrast geschlossen werden kann. Außerdem kann das Linienprofil 13 automatisch segmentiert werden, um verschiedene Segmente zu ermitteln, die den interessierenden Bildinhalten bzw. dem Hintergrund zuzuordnen sind. Z.B. durch Anwendung des bekannten CUSUM-Tests auf die durch das Linienprofil 13 gegebene Datenreihe können abrupte Intensitätsänderungen im Bild identifiziert werden. Hierdurch lässt sich die Bildqualität quantifizieren. Diese Auswertung ermöglicht es dem Auswertungssystem 5 (Fig. 1), eine Meldung zu erzeugen oder die Belichtung automatisch zu unterbrechen, sobald die Bildqualität vorgegebenen Zielwerten entspricht.

Der Vergleich der beiden unterschiedlich ortsaufgelösten Linienprofile 13 zeigt, dass für das Detektorelement 3 ein Sensorarray niedriger Auflösung (um ein mehrfaches niedriger als die Auflösung der Filmaufnahme), d.h. mit nur wenigen diskreten Sensorelementen 8 ausreicht, um die Bildqualität hinreichend zuverlässig zu beurteilen.

Mit dem hier beschriebenen System ist eine Vorhersagemöglichkeit gegeben, um basierend auf dem Fortschritt der Belichtung zum aktuellen Zeitpunkt in einem Vergleich die Belichtung zu einem späteren Zeitpunkt vorherzusagen. Hierdurch ist ableitbar, wann die Belichtung nicht nur gut und ausreichend, sondern optimal ist.

### Bezuaszeichenliste

- 1: System
- 2: Film
- 3: Detektorelement
- 4: Strahlung
- 5: Auswertungssystem
- 6: Kommunikationseinheit
- 7: externes Gerät
- 8: Strahlungssensoren
- 9: Stromversorgung
- 10: Strahlungsquelle
- 11: Bediener
- 12: Untersuchungsobjekt
- 13: Profillinie

## Patentansprüche

1. Einheit aus a) einem Film (2), insbesondere Röntgenfilm, und b) einem System (1) zur Erfassung von Bildparametern bei der Belichtung des Films (2), wobei das System (1) ein Detektorelement (3) aufweist, wobei das Detektorelement (3) dazu ausgebildet ist, die bei einer Belichtung auf den Film (2) auftreffende Strahlung (4) oder die durch den Film transmittierte Strahlung (4) ortsaufgelöst zu detektieren,
wobei
das Detektorelement (3) an dem Film (2) lösbar angebracht ist und als längliches Band ausgebildet ist, wobei sich das Band entlang des Films erstreckt und flexibel ist, und wobei das Detektorelement (3) dazu ausgebildet ist ein Signal zu erzeugen, aus dem durch die laufende Filmbelichtung erzeugte Bildparameter ableitbar sind.

2. Einheit nach Anspruch 1, **dadurch gekennzeichnet, dass** das Detektorelement (3) dazu ausgebildet ist, ein Signal zu erzeugen aus dem der durch die laufende Belichtung auf dem Film (2) erzeugte Bildkontrast ableitbar ist.

3. Einheit nach Anspruch 1 oder 2, **gekennzeichnet durch** ein Auswertungssystem (5), wobei das Detektorelement (3) mit dem Auswertungssystem (5) verbunden ist.

4. Einheit nach Anspruch 3, **dadurch gekennzeichnet, dass** das Auswertungssystem (5) lokale Belichtungsunterschiede analysiert.

5. Einheit nach Anspruch 3 oder 4, **dadurch gekennzeichnet, dass** das Auswertungssystem (5) eine Meldung erzeugt, sobald die Bildqualität vorgebbaren Kriterien entspricht.

6. Einheit nach einem der Ansprüche 3 bis 5, **dadurch gekennzeichnet, dass** das Auswertungssystem (5) dazu ausgebildet ist, die Belichtung des Filmes (2) automatisch zu unterbrechen, sobald die Bildqualität vorgebbaren Kriterien entspricht.

7. Einheit nach einem der Ansprüche 3 bis 6, **dadurch gekennzeichnet, dass** das Auswertungssystem (5) mit einer Kommunikationseinheit (6) verbunden ist, welche dazu ausgebildet ist, Ergebnisse des Auswertungssystems (5) an externe Geräte (7) zu übermitteln.

8. Einheit nach einem der Ansprüche 1 bis 7, **dadurch gekennzeichnet, dass** das Detektorelement (3) eine Mehrzahl von digitalen Strahlungssensoren umfasst.

9. Verfahren zum Vorbereiten des Belichtens eines Films (2), insbesondere Röntgenfilms, wobei das Verfahren umfasst:
Bereitstellen eines Systems (1) zur Erfassung von Bildparametern bei der Belichtung des Films (2), wobei das System (1) ein Detektorelement (3) aufweist, wobei das Detektorelement (3) als längliches und flexibles Band ausgebildet ist und dazu ausgebildet ist, die bei einer Belichtung auf den Film (2) auftreffende Strahlung (4) oder die durch den Film transmittierte Strahlung (4) ortsaufgelöst zu detektieren, und wobei das Detektorelement (3) dazu ausgebildet ist ein Signal zu erzeugen, aus dem durch die laufende Filmbelichtung erzeugte Bildparameter ableitbar sind;
Anbringen des Detektorelements (3) an dem Film (2) derart, dass sich das Band entlang des Films erstreckt und wieder von dem Film lösbar ist.

## Claims

1. A unit made up of a) a film (2), in particular an X-ray film, and b) a system (1) for acquiring image parameters during the exposure of the film (2), the system (1) comprising a detector element (3), the detector element (3) being designed to detect the radiation (4) incident on the film (2) during exposure or the radiation (4) transmitted through the film in a spatially resolved manner,
wherein
the detector element (3) is detachably attached to the film (2) and designed as an elongate strip, the strip extending along the film and being flexible, and the detector element (3) being designed to generate a signal from which image parameters generated by the current film exposure can be derived.

2. The unit according to claim 1, **characterized in that** the detector element (3) is designed to generate a signal from which the image contrast generated by the current exposure on the film (2) can be derived.

3. The unit according to claim 1 or 2, **characterized by** an evaluation system (5), the detector element (3) being connected to the evaluation system (5).

4. The unit according to claim 3, **characterized in that** the evaluation system (5) analyzes local differences in exposure.

5. The unit according to claim 3 or 4, **characterized in that** the evaluation system (5) generates a message as soon as the image quality corresponds to predefinable criteria.

6. The unit according to any one of claims 3 to 5, **characterized in that** the evaluation system (5) is designed to automatically interrupt the exposure of the film (2) as soon as the image quality corresponds to predefinable criteria.

7. The unit according to any one of claims 3 to 6, **characterized in that** the evaluation system (5) is connected to a communication unit (6), which is designed to transmit results of the evaluation system (5) to external devices (7).

8. The unit according to any one of claims 1 to 7, **characterized in that** the detector element (3) comprises a plurality of digital radiation sensors.

9. A method for preparing the exposure of a film (2), in particular an X-ray film, the method comprising:
providing a system (1) for acquiring image parameters during the exposure of the film (2), the system (1) comprising a detector element (3), the detector element (3) being designed as an elongate and flexible strip and being designed to detect the radiation (4) incident on the film (2) during exposure or the radiation (4) transmitted through the film in a spatially resolved manner, and the detector element (3) being designed to generate a signal from which image parameters generated by the current film exposure can be derived; and
attaching the detector element (3) to the film (2) in such a way that the strip extends along the film and can be detached from the film again.

## Revendications

1. Unité à base a) d'un film (2), en particulier, un film radiographique, et b) d'un système (1) permettant la détection de paramètres d'image lors de l'illumination du film (2), dans laquelle le système (1) présente un élément de détection (3), où l'élément de détection (3) est conçu pour détecter avec une résolution spatiale le rayonnement (4) tombant sur le film (2) lors d'une illumination ou le rayonnement (4) transmis par le film,
dans laquelle
l'élément de détection (3) est attaché de manière amovible sur le film (2) et est conçu sous forme d'une bande allongée, où la bande s'étend le long du film et est souple, et où l'élément de détection (3) est conçu pour créer un signal à partir duquel des paramètres d'image créés par l'illumination du film en continu peuvent être dérivés.

2. Unité selon la revendication 1, **caractérisée en ce que** l'élément de détection (3) est conçu pour créer un signal à partir duquel le contraste d'image créé par l'illumination en continu sur le film (2) peut être dérivé.

3. Unité selon la revendication 1 ou la revendication 2, **caractérisée par** un système d'exploitation (5), où l'élément de détection (3) est relié avec le système d'exploitation (5).

4. Unité selon la revendication 3, **caractérisée en ce que** le système d'exploitation (5) analyse des différences d'illumination locales.

5. Unité selon la revendication 3 ou la revendication 4, **caractérisée en ce que** le système d'exploitation (5) génère une information dès que la qualité d'image correspond à des critères pouvant être prédéfinis.

6. Unité selon l'une des revendications 3 à 5, **caractérisée en ce que** le système d'exploitation (5) est conçu pour interrompre automatiquement l'illumination du film (2) dès que la qualité d'image correspond à des critères pouvant être prédéfinis.

7. Unité selon l'une des revendications 3 à 6, **caractérisée en ce que** le système d'exploitation (5) est relié avec une unité de communication (6), laquelle est conçue pour transmettre des résultats du système d'exploitation (5) à des appareils (7) extérieurs.

8. Unité selon l'une des revendications 1 à 7, **caractérisée en ce que** l'élément de détection (3) comprend une multiplicité de capteurs de rayonnement numériques.

9. Procédé de préparation de l'illumination d'un film (2), en particulier, d'un film radiographique, où le procédé comprend :
la mise en place d'un système (1) permettant la détection de paramètres d'image lors de l'illumination du film (2), où le système (1) présente un élément de détection (3), où l'élément de détection (3) est conçu sous forme d'une bande allongée et souple, et est conçu pour détecter avec une résolution spatiale le rayonnement (4) tombant sur le film (2) lors d'une illumination ou le rayonnement (4) transmis par le film, et où l'élément de détection (3) est conçu pour créer un signal à partir duquel les paramètres d'image créés par l'illumination du film en continu peuvent être dérivés ;
la mise en place de l'élément de détection (3) sur le film (2) de telle manière que la bande s'étende le long du film et peut de nouveau être détachée du film.
